# EUROPÄISCHE PATENTSCHRIFT

(11) **EP 1 376 078 B1**
(45) Veröffentlichungstag und Bekanntmachung des Hinweises auf die Patenterteilung: **23.01.2008**
(21) Anmeldenummer: 03006454.7
(22) Anmeldetag: 21.03.2003
(51) Int. Cl.: G01G 19/414, G01L 1/12

(54) **Kraftsensor**
Force sensor
Capteur de force

(30) Priorität: 28.06.2002 DE 10229023
(43) Veröffentlichungstag der Anmeldung: 02.01.2004
(73) Patentinhaber: ROBERT BOSCH GMBH, 70442 Stuttgart (DE)
(72) Erfinder: Dukart, Anton, 70839 Gerlingen (DE); Wolf, Konrad, 75045 Walzbachtal (DE)

(56) Entgegenhaltungen:
- EP-A- 0 670 239
- WO-A-00/16054
- US-A- 4 738 325
- US-A- 5 971 432
- US-A- 6 129 168
- PATENT ABSTRACTS OF JAPAN vol. 2003, no. 05, 12. Mai 2003 (2003-05-12) & JP 2003 025890 A (TACHI S CO LTD), 29. Januar 2003 (2003-01-29)

## Beschreibung

### Stand der Technik

Die Erfindung betrifft einen Kraftsensor, insbesondere für die Erfassung von Kräften an einem Fahrzeugsitz, der unter Ausnutzung elektrischer oder elektromagnetischer Effekte ein elektrisches Signal abgibt, das einer auf den Kraftsensor wirkenden Druck-, Zug- oder Biegekraft entspricht, nach dem Oberbegriff des Hauptanspruchs.

Auf vielen Gebieten der Mechanik werden Kraftsensoren benötigt, die auch an relativ unzugänglichen Stellen an Geräten oder Aggregaten eine genaue Bestimmung der Zug- und/oder Druckkräfte ermöglichen sollen. Ein der Kraftmessung entsprechendes elektrisches Signal sollte für weitere Auswerte- oder Regelprozesse zur Verfügung stehen. Im Bereich der Automobilelektronik sind beispielsweise solche Kraftsensoren einsetzbar, wobei die bisher verwendeten Kraftsensoren meistens relativ groß sind und der Herstellungsprozess relativ teuer ist.

Für einige wichtige elektronischen Systeme im Kraftfahrzeug, wie z.B. für Gurtrückhaltesysteme wird ein kleiner und kompaktbauender Kraftsensor benötigt. Gerade an den Verbindungsstellen zwischen den Komponenten in denen sich die Kraft konzentriert, sind Kraftmessbolzen von besonderem Interesse. So wird beispielsweise für die Sitzgewichtkraftmessung und deren Verteilung, die an der Anbindung zum Sitz gemessen wird, ein Kraftsensor benötigt, der in großen Stückzahlen preiswert zu fertigen ist. Aber auch in der Fertigungs- und Qualitätsmesstechnik benötigt man zunehmend genaue, statisch messende Kraftsensoren.

Die an sich bekannten klein bauenden Sensoren basieren meistens auf dem piezoelektrischen Wandlerprinzip und sind deswegen nur dynamisch zu betreiben. Statische Kraftsensoren werden oft als Biegefedern ausgeführt, die mit Dehnmessstreifen ausgestattet sind. Diese ergeben zwar sehr präzise Kraftsensoren; sie bauen jedoch meist groß und teuer. Magnetoelastische Sensoren basieren entweder auf dem Kreuzduktor-Prinzip, das besonders für Anwendungen geeignet ist, die bei hohen Temperaturen ohne Elektronik vor Ort auskommen müssen und nur einen kleinen Bauraum benötigen, oder nach dem Torduktor-Prinzip, bei dem über zwei um 90° zueinander gedrehten mit Spulen bewickelten U-Kernen kraftabhängig die Magnetfeldverteilung berührungslos erfasst wird. Das Kreuzduktor-Prinzip hat den Nachteil, dass es nur kleine Nutzspannungen liefert, die, mit einem meist großen Offset beaufschlagt, nur schwer auswertbar sind. Außerdem können bei bewegten oder rotierenden Teilen diese Sensoren nicht oder nur mit großem zusätzlichen Aufwand eingesetzt werden. Das Torduktor-Prinzip erlaubt Kraftmessungen auch am rotierenden Teil, ist aber stark abstandssensitiv.

Für die Sitzgewichtsensierung, insbesondere in einem Kraftfahrzeug, besteht auch die Forderung, dass die Sitztor-Prinzip erlaubt Kraftmessungen auch am rotierenden Teil, ist aber stark abstandssensitiv.

Für die Sitzgewichtsensierung, insbesondere in einem Kraftfahrzeug, besteht auch die Forderung, dass die Sitzhöhe nicht erhöht wird und außerdem ist eine Überlastforderung sehr wichtig. Aus der WO 00/16054 A1 ist ein Messaufnehmen zur Bewegungserkennung in einem Fahrzeugsitz bekannt, bei dem zwischen einem die Sitzschale umfassenden Obergestell und einem am Fahrzeugboden, gegebenenfalls auch über einen Längs- und Höhenverstellungsmechanismus befestigten Untergestell eine elastische Verformung eines Trageelements mit der Messzelle erfasst wird.

### Vorteile der Erfindung

Ein Kraftsensor der eingangs beschriebenen Art, insbesondere für die Erfassung der Kräfte an einem Fahrzeugsitz, mit einem Trageelement zwischen einem Ober- und einem Untergestell, in dem eine Kraftmesszelle angeordnet ist, wird mit den esten erfindungsgemäßen Merkmalen des Kennzeichens des Hauptanspruchs dadurch vorteilhaft weitergebildet, dass das Obergestell der feststehende Teil einer Schiene zur Längs- oder Höhenverstellung ist und das Trageelement innerhalb oder an diesem Teil der Schiene angeordnet ist.

Eine Wirkung der erfindungsgemäßen Kraftmessanordnung ist dabei hauptsächlich die Anbringung des Sensors in der Schiene oder seitlich an der Schiene, wobei hiermit für den Fahrzeugsitz nur eine minimale Haltepunkterhöhung bis ca. 1 mm realisiert werden kann. Vorteilhaft bei dieser Erfindung ist auch, dass der gesamte Kraftfluss durch diese Kraftmessanordnung geführt werden kann.

Die Erfindung enthält gemäß den zweiten Merkmalen des Kennzeichens die Messzelle mindestens einen Biegebalken, der aufgrund der zu erfassenden Krafteinwirkung eine Beeinflussung des magnetischen Feldes im Bereich eines magnetfeldempfindlichen Sensorelementes der Messzelle bewirkt. Der Biegebaken kann dabei mit seinem einem Ende in einem Topf gehalten sein, der entweder am Untergestell oder an der Schiene des Obergestells befestigt ist und mit seinem jeweils anderen Ende an der Schiene des Obergestells oder am Untergestell befestigt ist.

Der Topf kann nach einer ersten Ausführungsform mittels einer Überwurfmutter und eines Befestigungswinkels am Untergestell und das andere Ende des Biegebalkens mittels eines weiteren Befestigungswinkels an der Unterseite oder an einer Seitenwand der Schiene des Obergestells befestigt sein. Alternativ kann der Topf auch mittels einer Überwurfmutter und eines weiteren Befestigungswinkels an der Unterseite oder einer Seitenwand der Schiene des Obergestells befestigt sein und das andere Ende des Biegebalkens kann mittels eines Befestigungswinkels am Untergestell befestigt werden.

Das Sensorelement besteht erfindungsgemäß bevorzugt aus einem an dem mindestens einem Biegbalken gehaltenen Hall-Element, das unter der auf die Biegbalken einwirkenden Kraft im Feld eines relativ ortsfest angeordneten Permanentmagneten auf einfache Weise auslenkbar ist.

### Zeichnung

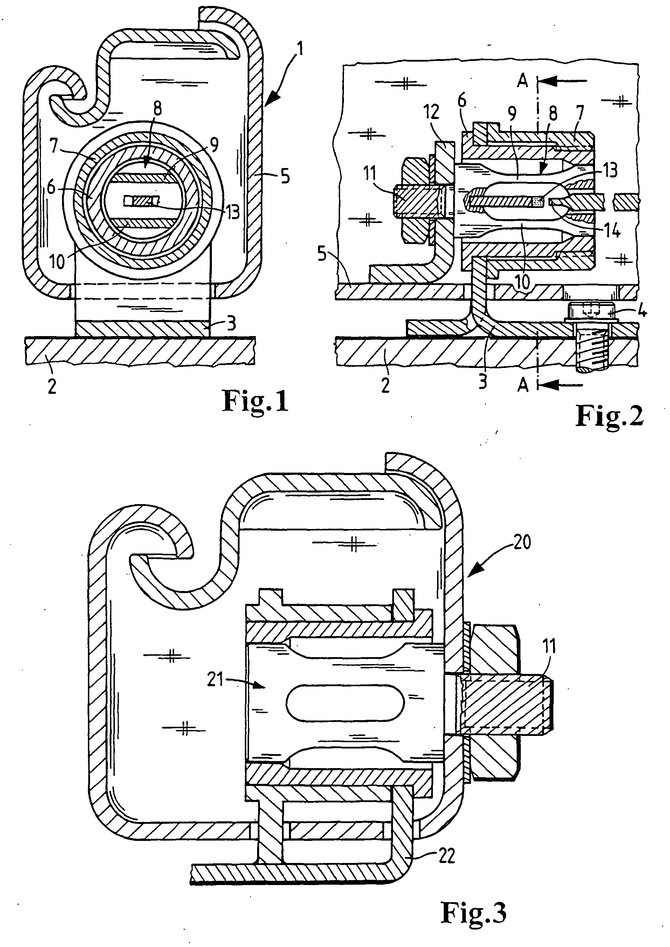

Figur 3 einen Querschnitt durch eine Schiene zur Längsverstellung eines Fahrzeugsitzes in einem Kraftfahrzeug mit einer seitlichen Anbringung der Kraftmesszelle.

### Beschreibung der Ausführungsbeispiele

In Figur 1 und in Figur 2 ist eine Schiene 1 zur Längsverstellung eines hier nicht näher erläuterten Fahrzeugsitzes am Bodenbereich 2 eines Kraftfahrzeugs in verschiedenen Ansichten gezeigt. Ein erster Befestigungswinkel 3 ist dabei mit einer Bodenschraube 4 am Boden 2 befestigt und durch eine Ausnehmung des feststehenden Unterteils 5 der Schiene 1 in diese hineingeführt.

Innerhalb der Schiene 1 ist ein Topf 6 mit einer Überwurfmutter 7 an dem Befestigungswinkel 3 gehalten. Im Topf 6 ist die eigentliche Messzelle 8 untergebracht, die zwei Biegebalken 9 und 10 enthält und mit einem Ende im Topf 6 und mit dem anderen Ende über einen Schraubbolzen 11 an einem weiteren Befestigungswinkel 12 an dem Unterteil 5 der Schiene 1 gehalten ist.

Ein Sensorelement besteht aus einem Permanentmagneten 13 und einem Hall-Element 14 mit einem angeschlossenen integrierten Schaltkreis der ein von der Auslenkung der Biegebalken 9 und 10 abhängiges elektrisches Ausgangssignal liefert.

Wenn beim dargestellten Ausführungsbeispiel eine Kraft vom Fahrzeugsitz auf die Schiene 1, hier insbesondere auf das Unterteil 5, gelenkt wird, so wird diese Kraft über den weiteren Befestigungswinkel 12 an der Schiene 1 auf die Biegebalken 9 und 10 geführt. Die sich durchbiegenden Biegebalken 9 und 10 führen dazu, dass sich die Lage des Permanentmagneten 13 und des Hallelements 14 zueinander verändert und somit eine im Hallelement 14 messbare Magnetfeldänderung erfolgt.

Beim Ausführungsbeispiel nach Figur 3 ist im Unterschied zum vorher beschriebenen Ausführungsbeispiel an einer Schiene 20 eine Kraftmesszelle 21 mittels eines Befestigungswinkels 22 seitlich an der Schiene 20 befestigt. In der Funktion entspricht dieses Ausführungsbeispiel der Ausführung nach den Figuren 1 und 2.

## Patentansprüche

1. Kraftsensor für die Erfassung der Kräfte an einem Fahrzeugsitz mit
- einem Trageelement zwischen einem Ober- und einem Untergestell, in dem eine Kraftmesszelle (8;21) angeordnet ist, **dadurch gekennzeichnet, dass**
- das Obergestell der feststehende Teil einer Schiene (1;20) zur Längs- oder Höhenverstellung ist und dass die Messzelle (8;21) innerhalb oder an der Schiene (1,5;20) angeordnet ist,
- dass die Messzelle (8;21) mindestens einen Biegebalken (9,10) enthält, der aufgrund der zu erfassenden Krafteinwirkung eine Beeinflussung des magnetischen Feldes im Bereich eines magnetfeldempfindlichen Sensorelementes (13,14) der Messzelle (8;21) bewirkt und dass
- der mindestens eine Biegebaken (9,10) mit seinem einem Ende in einem Topf (6) gehalten ist, der entweder am Untergestell oder an der Schiene (1;20) des Obergestells befestigt ist und mit seinem jeweils anderen Ende an der Schiene (1;20) des Obergestells oder am Untergestell befestigt ist.

2. Kraftsensor nach Anspruch 1, **dadurch gekennzeichnet, dass**
- der Topf (6) mittels einer Überwurfmutter (7) und eines Befestigungswinkels (3) am Untergestell und das andere Ende des Biegebalkens (9,10) mittels eines weiteren Befestigungswinkels (12) an der Unterseite oder einer Seitenwand der Schiene (1;20) des Obergestells befestigt ist.

3. Kraftsensor nach Anspruch 1, **dadurch gekennzeichnet, dass**
- der Topf (6) mittels einer Überwurfmutter (7) und eines weiteren Befestigungswinkels (12) an der Unterseite oder einer Seitenwand der Schiene (1;20) des Obergestells befestigt ist und das andere Ende des Biegebalkens (9;10) mittels eines Befestigungswinkels (3) am Untergestell befestigt ist.

4. Kraftsensor nach einem der vorhergehenden Ansprüche, **dadurch gekennzeichnet, dass**
- das Sensorelement aus einem an dem mindestens einen Biegebalken (9;10) gehaltenen Hall-Element (14) besteht, das unter der auf die Biegbalken (9;10) einwirkenden Kraft im Feld eines relativ ortsfest angeordneten Permanentmagneten (13) auslenkbar ist.

5. Kraftsensor nach Anspruch 4, **dadurch gekennzeichnet, dass**
- das Hall-Element (14) mit einem angeschlossenen integrierten Schaltkreis versehen ist, der ein von der Auslenkung der Biegebalken (9,10) abhängiges elektrisches Ausgangssignal liefert.

## Claims

1. Force sensor for detecting the forces on a vehicle seat, comprising
- a supporting element between an upper and a lower frame, in which a load measuring cell (8; 21) is arranged, **characterized in that**
- the upper frame is the stationary part of a rail (1; 20) for longitudinal or vertical adjustment, and **in that** the measuring cell (8; 21) is arranged within or on the rail (1, 5; 20),
- **in that** the measuring cell (8; 21) contains at least one bending beam (9, 10) which has an influence on the magnetic field in the region of a magnet-field-sensitive sensor element (13, 14) of the measuring cell (8; 21) on account of the action of force to be detected, and **in that**
- the at least one bending beam (9, 10) is held by one of its ends in a pot (6) which is fixed either to the lower frame or to the rail (1; 20) of the upper frame and with its respectively other end is fixed to the rail (1; 20) of the upper frame or to the lower frame.

2. Force sensor according to Claim 1, **characterized in that**
- the pot (6) is fixed to the lower frame by means of a union nut (7) and a fixing bracket (3) and the other end of the bending beam (9, 10) is fixed to the lower face or a side wall of the rail (1; 20) of the upper frame by means of a further fixing bracket (12).

3. Force sensor according to Claim 1, **characterized in that**
- the pot (6) is fixed to the lower face or to a side wall of the rail (1; 20) of the upper frame by means of a union nut (7) and a further fixing bracket (12) and the other end of the bending beam (9; 10) is fixed to the lower frame by means of a fixing bracket (3).

4. Force sensor according to one of the preceding claims, **characterized in that**
- the sensor element comprises a Hall element (14) which is held on the at least one bending beam (9; 10) and can be deflected under the force, which acts on the bending beams (9; 10), in the field of a permanent magnet (13) which is arranged in a relatively stationary manner.

5. Force sensor according to Claim 4, **characterized in that**
- the Hall element (14) is provided with a connected integrated electrical circuit which supplies an electrical output signal which is dependent on the deflection of the bending beams (9; 10).

## Revendications

1. Capteur de force pour saisir les efforts exercés sur un siège de conducteur comprenant :
- un élément de support entre un châssis supérieur et un châssis inférieur et dans lequel est logée une cellule de mesure de force (8; 21),
**caractérisé en ce que**
- le châssis supérieur est la partie fixe d'un rail (1, 20) pour le réglage longitudinal et en hauteur et la cellule de mesure (8, 21) est installée dans ou sur le rail (1, 5, 20) ;
- la cellule de mesure (8, 21) comporte au moins une poutre de flexion (9, 10) qui agit sous l'effet de la force à saisir, pour influencer le champ magnétique au niveau d'un élément de capteur (13, 14) sensible au champ magnétique de la cellule de mesure (8, 21) ; et
- au moins une poutre de flexion (9, 10) est tenue par une extrémité dans un pot (6) fixée soit au châssis inférieur, soit au rail (1, 20) du châssis supérieur et son autre extrémité est fixée au rail (1, 20) du châssis supérieur ou au châssis inférieur.

2. Capteur de force selon la revendication 1,
**caractérisé en ce que**
- le pot (6) est fixé par un écrou chapeau (7) et une cornière de fixation (3) au châssis inférieur et l'autre extrémité de la poutre de flexion (9, 10) est fixée par une autre cornière de fixation (12) au côté inférieur ou à la paroi latérale du rail (1, 20) du châssis supérieur.

3. Capteur de force selon la revendication 1,
**caractérisé en ce que**
- le pot (6) est fixé par un écrou chapeau (7) et une autre cornière de fixation (12) au côté inférieur ou à la paroi latérale du rail (1, 20) du châssis supérieur et l'autre extrémité de la poutre de flexion (9, 10) est fixée au châssis inférieur par l'intermédiaire d'une cornière de fixation (3).

4. Capteur de force selon l'une des revendications précédentes,
**caractérisé en ce que**
- l'élément de capteur se compose d'au moins un élément Hall (14) porté par au moins une poutre de flexion (9, 10), cet élément étant dévié par la force agissant sur la poutre de flexion (9, 10) dans le champ d'un aimant permanent (13) installé fixe, de manière relative.

5. Capteur de force selon la revendication 4,
**caractérisé en ce que**
- l'élément Hall (14) est muni d'un circuit intégré, raccordé, qui fournit un signal électrique de sortie dépendant de la déviation de la poutre de flexion (9, 10).
